# EUROPEAN PATENT APPLICATION

(11) **EP 2 239 967 A1**
(43) Date of publication of application: **13.10.2010**
(21) Application number: 09717360.3
(22) Date of filing: 02.03.2009
(51) Int. Cl.: H04W 4/02, G06F 13/00, G06Q 10/00, G06Q 30/00, H04W 84/10

(54) **ADVERTISEMENT DISTRIBUTION SYSTEM, DEVICE, AND ADVERTISEMENT INSERT METHOD USING FEMTO-CELL**

(30) Priority: 03.03.2008 JP 2008051890
(71) Applicant: NEC Corporation, Minato-ku Tokyo 108-8001 (JP)
(72) Inventor: KIDO, Masaaki, Tokyo 108-8001 (JP)
(74) Representative: Betten & Resch
(86) International application number: PCT/JP2009/053821
(87) International publication number: WO 2009/110407

(57) **Abstract**

It is required to provide an advertisement distribution system and an advertisement distribution method capable of a highly cost-effective information distribution at a low cost. When a mobile terminal is connected to a femtocell type narrow area small-scale mobile communication base station, public information that is stored in a memory unit and that a user who founded the base station concerned has specified is transmitted to a mobile terminal.

## Description

### Technical field

The present invention relates to a technology in which a general retail sales store or the like distributes an advertisement easily by using a femtocell type narrow area small-scale mobile communication base station.

### Background art

For a related advertisement distribution business for mobile terminals, a contract with a type 1 mobile communication carrier or a professional advertisement distribution company accompanying the mobile communication carrier is required. For this reason, for a general retail enterprise or the like other than a major company, barriers to entry for the advertisement distribution for mobile terminals is high, and the advertisement distribution for mobile terminals cannot be introduced easily. Accordingly, a general retail enterprise or the like other than a major company needed to start a website which is generally called "voluntary site" and to wait for a one-sided connection from a mobile terminal subscriber. A contract with a type 1 mobile communication carrier or a professional advertisement distribution company accompanying the mobile communication carrier makes it possible to distribute efficient advertisement based on a customized advertisement distribution business model. However, such a contract also costs a lot of money, and general retail sales stores or the like other than a major company were not in a condition to be able to introduce it easily.

On the other hand, in femtocell type mobile communication, there are a method in which a type 1 mobile communication carrier is proactive arranging a femtocell type base station like a conventional mobile wireless base station, and a method in which a general user is proactive arranging a femtocell type base station. And in a method for a user who is proactive in arranging a femtocell type base station, the user himself bears an building cost of the femtocell type narrow area small-scale mobile communication base station. And the user connects a femtocell type base station to a femtocell type narrow area small-scale mobile communication base station termination device provided by a type 1 mobile communication carrier, using the user's general public network connection. Some of type 1 mobile communication carrier promotes building a femtocell type base station by a user. However, when a user builds a femtocell type base station, there was a possibility that issues necessary for spreading it such as burden of the building cost and a general public network cost might not be settled.

As a related technology of the present invention, a technology that distributes advertisement which fits in a user's taste upon access by a mobile terminal is proposed. In that configuration, when registering an advertisement, a distribution control server accepts at least image data of the advertisement concerned or the like and an attribute of a user to whom an advertisement is distributed, and stores them in a banner directory associating them each other. And the distribution control server accepts a user attribute at a time of user registration from a mobile terminal, gives a unique URL which is a URL specific to the user and transmits it to the mobile terminal. Further, the user attribute and the unique URAL are stored related to each other. On a mobile terminal, the unique URL is registered as an address which should be accessed at a time of starting a browser. When the distribution control server is accessed by a mobile terminal using a unique URL, the distribution control server refers to a corresponding user attribute and extracts an advertisement banner which fits in the user attribute concerned from a banner directory, And the distribution control server pastes an advertisement banner to an advertisement space of contents and transmits contents to a user's mobile terminal (for example, refer to patent document 1).
[Patent document 1] Japanese Patent Application Laid-Open No. 2001-357058

### DISCLOSURE OF THE INVENTION

### TECHNICAL PROBLEM

However, in the above-mentioned related technology, it was difficult for a person who built a base station of femtocell type mobile wireless communication to make it possible to distribute an advertisement which leads to an increase in sales at a general retail store by a distribution of such an advertisement or the like, only at a low cost consisting of a cost for a base station of femtocell type mobile wireless communication and an electronic computer device, a cost burden for a general public network and a cost for maintenance, and without making an information distribution contract with a type 1 mobile communication carrier or a professional advertisement distribution company accompanying it.

The present invention is made in order to solve the problem mentioned above, and the object is to provide an advertisement distribution system and an advertisement distribution method which make a highly cost-effective information distribution possible at low cost and without making a information distribution contract with a type 1 mobile communication carrier or a professional advertisement distribution company accompanying it.

### TECHNICAL SOLUTION

In order to accomplish the purpose, the present invention has the following feature.

An advertisement distribution system of the present invention using a femtocell is characterized by transmitting public information that is stored in a memory unit specified by a user who built the base station to the mobile terminal when a mobile terminal is connected to a femtocell type narrow area small-scale mobile communication base station.

Further, a device of the present invention is characterized by, transmitting the public information which is stored in a memory unit specified by a user who built the device to the mobile terminal when the mobile terminal is connected.

Further, an advertisement insertion method of the present invention is characterized by transmitting public information which is stored in a memory unit specified by a user who built the base station to the mobile terminal when a mobile terminal is connected to a femtocell type narrow area small-scale mobile communication base station.

### ADVANTAGEOUS EFFECT OF THE INVENTION

According to the present invention, a highly cost-effective information distribution becomes possible at a low cost and without making an information distribution contract with a type 1 mobile communication carrier or a professional advertisement distribution company accompanying it.

### BEST MODE FOR CARRYING OUT THE INVENTION

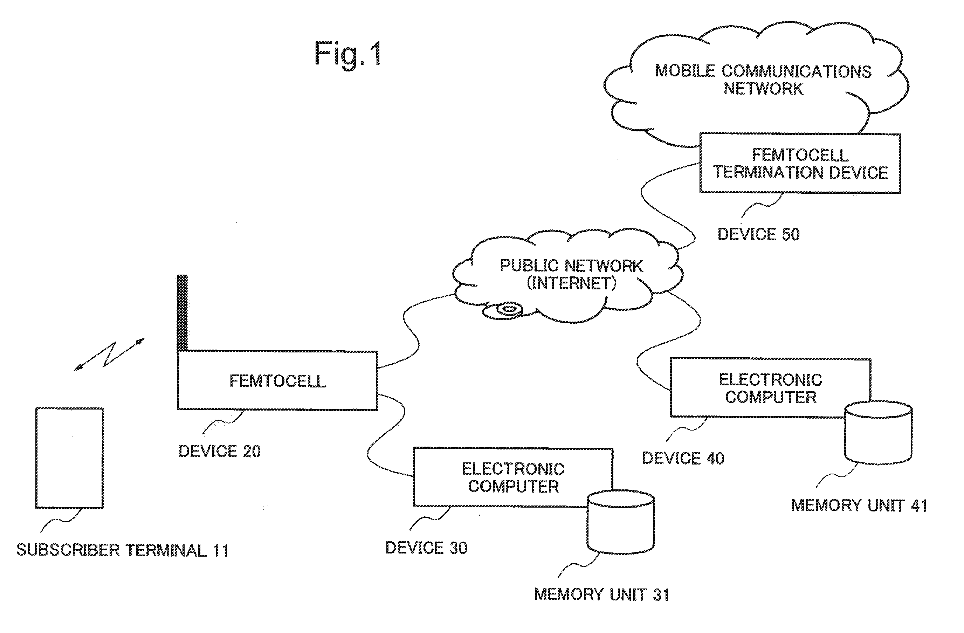

Hereinafter, the first exemplary embodiment of the present invention will be described in detail with reference to drawings. As shown in Fig. 1, this exemplary embodiment includes a subscriber terminal 11, a femtocell type narrow area small-scale mobile base communication station device 20, an electronic computer device 30 connected to the femtocell type narrow area small-scale mobile wireless communication base station device 20, a memory unit 31 attached to the electronic computer device 30 and a femtocell termination device 50 built in a mobile communications network. Alternatively, this exemplary embodiment includes a subscriber terminal 11, the femtocell type narrow area small-scale mobile base communication station device 20, an electronic computer device 40 which is connected to a public network (the internet) to which the femtocell type narrow area small-scale mobile wireless communication base station device 20 is connected and is generally made public, the electronic computer device 40, a memory unit 41 attached to the electronic computer device 40, and the femtocell termination device 50 built in a mobile communications network. And according to this exemplary embodiment, a communication bypass method is controlled by program control built in the femtocell type narrow area small-scale mobile wireless communication base station device 20, and distribution data which is stored in the memory unit 31 attached to the electronic computer device 30 or a memory unit 41 attached to the electronic computer device 40 is distributed from the electronic computer device 30 or the electronic computer device 40.

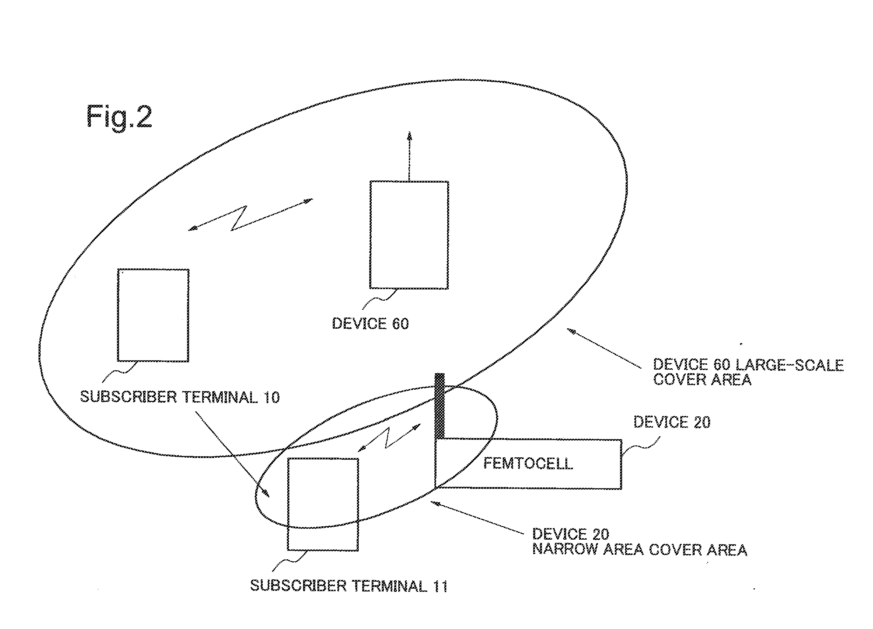

Next, operation of this exemplary embodiment will be described in detail with reference to Figs. 2 to 4.
A subscriber terminal establishes a connection with a mobile wireless communication base station which is built by a mobile communication carrier based on an existing and prescribed mobile communication method. A subscriber terminal selects and connects one or plurality of the most suitable mobile wireless communication base stations depending on received radio wave intensity transmitted from existing plurality of mobile communication wireless base stations.

In Fig. 2, a mobile wireless communication base station 60 which configures a large-scale cover area and a narrow region cover area configured by a femtocell type mobile communication base station 20 are adjacent. And a subscriber terminal 10 which has established a connection with the mobile wireless communication base station 60 in an area of a mobile wireless communication base station 60 moves to the narrow region cover area configured by the femtocell type mobile wireless communication base station 20. In this case, the subscriber terminal 10 selects one or plurality of the most suitable connection destination mobile wireless communication base stations based on the received radio wave intensity obtained from a received radio wave status from the mobile wireless communication base station 60 and a received radio wave status from the femtocell type mobile wireless communication base station 20.

Here, it is supposed that the subscriber terminal 10 is in a narrow region cover area configured by the femtocell type mobile wireless communication base station 20 as the subscriber terminal 11, and is in a status that it can receive enough radio wave from the femtocell type mobile wireless communication base station 20 compared to a received radio wave status from a mobile wireless communication base station 60. In this case, the subscriber terminal 11 notifies the femtocell type mobile wireless communication base station 20 of its own subscriber information at a time of establishing a connection to the femtocell type mobile wireless communication base station 20 and establishes a connection. This connection establishment method is prescribed by an existing mobile communication connection method.

Hereinafter, a method for a builder of the femtocell type mobile wireless communication base station 20 for distributing an advertisement when the subscriber terminal 11 performed HTTP connection request such as a portal or the internet site access after the subscriber terminal 11 established a connection to the femtocell type mobile wireless communication base station 20 is described.

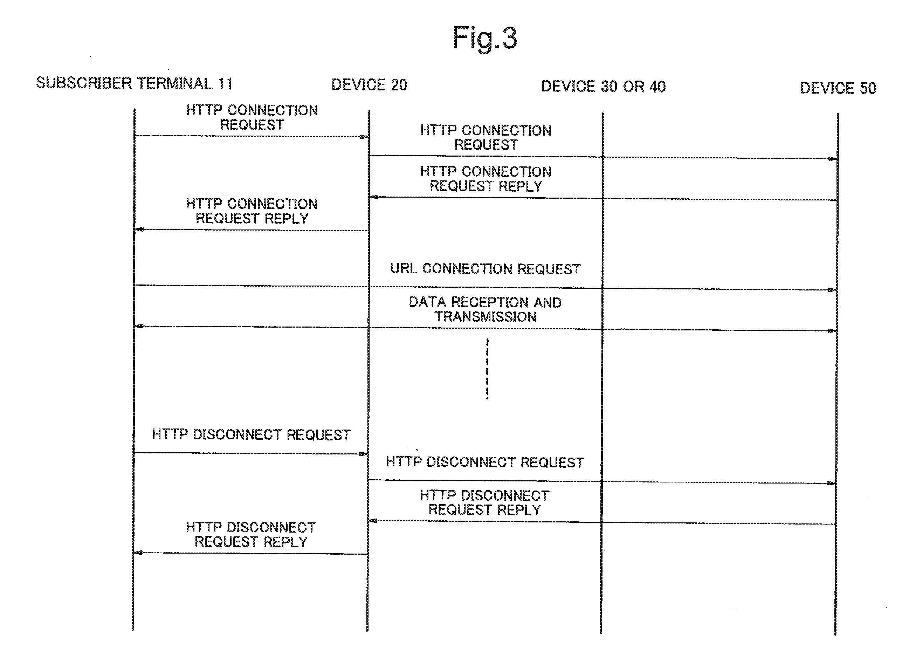

As shown in Fig. 3, when the subscriber terminal 11 performs an HTTP connection request in order to access a certain URL, the subscriber terminal 11 performs an HTTP connection request to the femtocell type mobile wireless communication base station 20. And the femtocell type mobile wireless communication base station 20 transmits an HTTP connection request to the femtocell termination device 50. After the femtocell type mobile wireless communication base station 20 transmits a reply to the connection request, an HTTP connection is established between the subscriber terminal 11 and the femtocell termination device 50 (Step A1). And based on the URL information entered from a subscriber terminal 11, the URL information acquisition request is transmitted to an electronic computer device such as a personal computer, a workstation or a server installed in a mobile communications network or a public network such as the internet via the femtocell type mobile wireless communication base station 20 and the femtocell termination device 50. These electronic computer devices reply recorded information to the subscriber terminal 11 (Step A2). And a screen provided on a subscriber terminal 11 displays information received from an electronic computer device (Step A3).

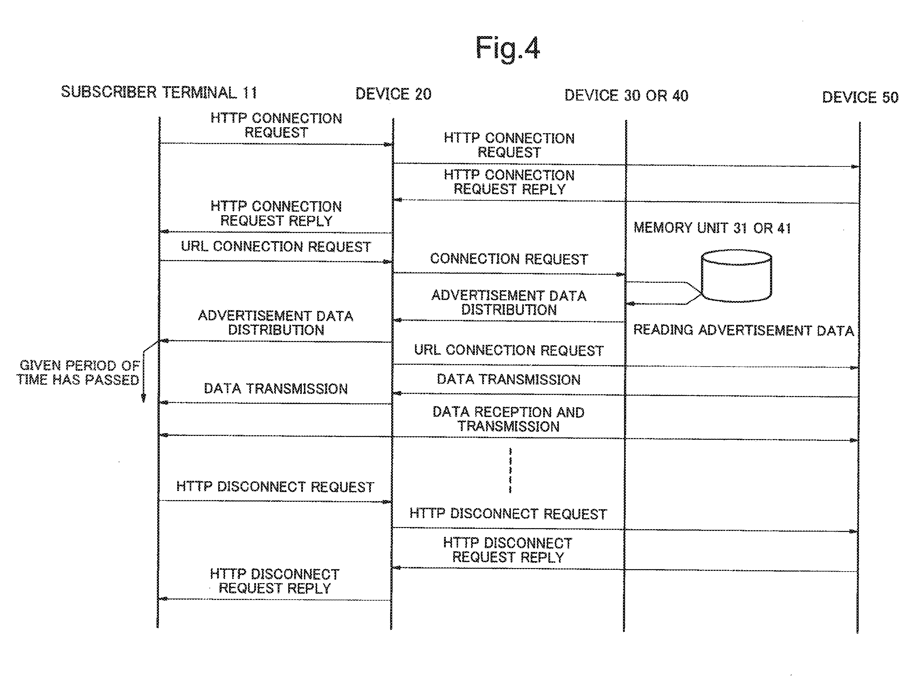

According to this exemplary embodiment, as shown in Fig. 4, when the subscriber terminal 11 performs an HTTP connection request to access a certain URL, the subscriber terminal 11 performs an HTTP connection request to the femtocell type mobile wireless communication base station 20. And the femtocell type mobile wireless communication base station 20 transmits an HTTP connection request to the femtocell termination device 50. After the femtocell termination device 50 transmits a reply to a connection request, an HTTP connection is established between the subscriber terminal 11 and the femtocell termination device 50 (Step A1). Here, the femtocell type mobile wireless communication base station 20 reserves a URL information acquisition request temporarily based on URL information entered from the subscriber terminal 11 (Step B2). And the femtocell type mobile wireless communication base station 20 performs a forwarding connection to a predetermined URL which is established on an electronic computer device 30 such as a connected personal computer (Step B3).

The electronic computer device 30 reads information which is configured to be delivered to a subscriber terminal, such as an arbitrary advertisement of a builder of a base station of a femtocell type narrow area small-scale mobile communication, from the attached memory unit 31. Each of the information is composed of ML which can be decoded by and displayed on the subscriber terminal 11 such as cHTML, XML and HTML. And the electronic computer device 30 transmits information read from the memory unit 31 as reply data at the time of a URL information reply to a URL information acquisition request from the femtocell type mobile wireless communication base station 20 (Step B4).

The femtocell type mobile wireless communication base station 20 sends a URL information acquisition reply data from the electronic computer device 30 to the subscriber terminal 11 as a reply, and the subscriber terminal 11 displays received data on a screen provided on the subscriber terminal 11(step B5).

The subscriber reads advertisement information or the like transmitted from the electronic computer device 30 temporarily. The subscriber terminal 11 displays advertisement information or the like for a given period of time. While the arbitrary distribution information is displayed for a given period of time on a screen of the subscriber terminal 11, the femtocell type mobile wireless communication base station 20 resumes a URL information acquisition request from the subscriber terminal 11 whose connection is reserved temporarily in Step B2. And the femtocell type mobile wireless communication base station 20 replies to the subscriber terminal 11 information which is recorded on an electronic computer device such as a personal computer, a workstation or a server installed in a mobile communications network or a public network such as the internet via the femtocell termination device 50 (Step A2). The subscriber terminal 11 displays the received data on a provided screen (Step A3).

Temporal reservation by the femtocell type mobile wireless communication base station 20 of the URL information acquisition request from the subscriber terminal 11 performed in Step B2 is performed only at the first time of reception of the URL information acquisition request from the subscriber terminal 11. And the URL information acquisition request from the subscriber terminal 11 is temporarily reserved only once while the HTTP connection is reserved between the subscriber terminal 11 and the femtocell termination device 50.

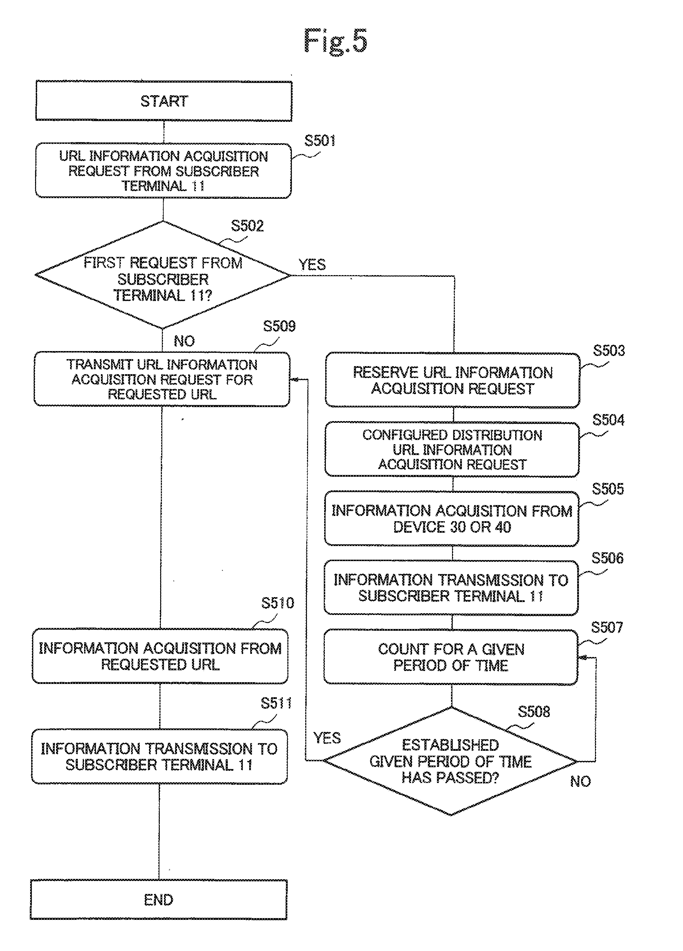

Fig. 5 shows a flow which performs controls by a program embedded in the femtocell type mobile wireless communication base station 20.

First, the femtocell type mobile wireless communication base station 20 performs a URL information acquisition request from the subscriber terminal 11 (S501). The femtocell type mobile wireless communication base station 20 judges whether it is the first request from a subscriber terminal 11 (S502), and if it is the first request, then reserves the URL information acquisition request (S503). And the femtocell type mobile wireless communication base station 20 performs a configured distribution URL information acquisition request (S504). The femtocell type mobile wireless communication base station 20 performs information acquisition from a device 30 or a device 40 (S505), and transmits acquired information to the subscriber terminal 11 (S506). The femtocell type mobile wireless communication base station 20 counts for a given period of time after that, and when a configured given period of time has passed (S507 and S508), moves to Step S509.

On the other hand, the femtocell type mobile wireless communication base station 20 judges whether it is the first request from a subscriber terminal 11 (S502), and if it is not the first request, then an acquisition request of URAL information is transmitted for a requested URL (S509). The femtocell type mobile wireless communication base station 20 performs information acquisition from a requested URL (S510) and transmits information to a subscriber terminal 11 (S511).

As stated above, according to this exemplary embodiment, by a distribution of such an advertisement or the like, a builder of the base station of femtocell type mobile wireless communication can give an advertisement which leads to an increase in sales at a general retail store, only at low cost consisting of a cost for the base station of femtocell type mobile wireless communication and an electronic computer device, cost burden for a general public network and cost for maintenance, and without making an information distribution contract with a type 1 mobile communication carrier or a professional advertisement distribution company accompanying it, and a highly cost-effective information distribution becomes possible.

On the other hand, when seen from a subscriber's side, profitable information or the like can be viewed at each visited store by pushing down a button on a possessed mobile terminal once. Further, depending on connection provisions which is proposed by the builder of the base station of femtocell type mobile wireless communication, additional effect can also be expected such that the builder of a base station of femtocell type mobile wireless communication bears data communication cost or the like, and subscriber's free data communication connection becomes possible. As a result, additional effect such as improving an effect of drawing customers can also be expected for a builder of the base station of femtocell type mobile wireless communication. Further, because effect due to a builder's building of a base station of femtocell type mobile wireless communication can be expected for a type 1 mobile communication carrier who sells a base station of femtocell type mobile wireless communication, that is, the carieer can expect sales expansion.

Next, another exemplary embodiment of the present invention will be described in detail.
In Fig. 2, a case when a subscriber terminal 11 can connect via a femtocell type narrow area small-scale mobile communication base station device 20 is considered. In this case, when the femtocell type narrow area small-scale mobile communication base station device 20 senses that the subscriber terminal 11 has entered its own control area, it acquires terminal information on the subscriber terminal and controls a voice communication connection request and a data communication connection request from a subscriber terminal. Subscriber terminal information which this femtocell type narrow area small-scale mobile communication base station device 20 acquired is acquired and stored in an electronic computer device 30 connected to a femtocell type narrow area small-scale mobile communication base station device 20. And by performing message transmission using SMS (short message), MMS (multimedia message service) or the like to the subscriber terminal concerned, a wide area information distribution becomes possible. The femtocell type narrow area small-scale mobile communication base station device is a device which covers only a narrow area of several meters to ten and several meters of range, and can also perform distribution to a subscriber terminal which passes its own cover area for an instant by a femtocell type.

Also, aggregating stored subscriber information and stored built location of the femtocell type narrow area small-scale mobile communication base station by type 1 mobile communication carriers, it becomes possible to grasp more in detail summed up behavior tendency of the subscriber concerned or a subscriber's location in case of emergency than aggregation based on a present mobile communication base station device. As a result, a femtocell type narrow area small-scale mobile communication base station device can transmit an advertisement distribution or the like which a type 1 mobile communication carrier operates precisely, and can cover even a currently blind mobile wireless communication zone.

Further, each exemplary embodiment mentioned above is a preferred exemplary embodiment of the present invention, and various changes of implementation are possible within the range that does not deviate from the spirit and scope of the present invention. For example, a process which realizes a function of each device may be performed by making each device read and execute a program which realizes the function of each device. Further, the program may be transmitted to other computer systems via a CD-ROM or a magneto-optical disk which are computer-readable recording medium, or by a transmission wave through the Internet or a telephone line which are transmission media. Further, an exemplary embodiment whose function of each device is realized by integrating another device or an exemplary embodiment whose function is dispersed and realized by an added device is also within the scope of the present invention.

Further, this application claims priority based on Japanese Patent Application. No. 2008-051890 filed on March 3, 2008 and the disclosure thereof is incorporated herein in its entirety.

### [Industrial availability]

The present invention is, for example, applicable to an advertisement distribution using a femtocell type narrow area small-scale mobile communication base station.

### Brief description on the drawings

Fig.1 is a figure showing a system configuration according to an exemplary embodiment of the present invention.
Fig.2 is a figure according to the exemplary embodiment of the present invention, explaining that the most suitable connection destination mobile wireless communication base station is selected by the received radio wave intensity.
Fig.3 is a figure showing a processing operation when a subscriber terminal according to the exemplary embodiment of the present invention accesses a certain URL.
Fig.4 is a figure showing a processing operation of an information distribution to a subscriber terminal according to the exemplary embodiment of the present invention.
Fig.5 is a figure showing a flow which performs controls by a program loaded into a femtocell type mobile wireless communication base station according to the exemplary embodiment of the present invention.

## Claims

1. An advertisement distribution system using a femtocell **characterized by** transmitting public information that is stored in a memory unit that is specified by a user who built the base station to a mobile terminal when said mobile terminal is connected to a femtocell type narrow area small-scale mobile communication base station.

2. An advertisement distribution system using a femtocell according to claim 1 **characterized by** acquiring public information that is stored in a memory unit specified by a user who built said base station, transmitting it to said mobile terminal and displaying it before acquiring desired information and displaying it on said mobile terminal, when a mobile terminal is connected to a femtocell type narrow area small-scale mobile communication base station and said desired information of a user of a mobile terminal is acquired.

3. An advertisement distribution system using a femtocell according to claims 1 or 2, **characterized by** collecting tendency information on a mobile terminal subscriber using said base station.

4. A device, **characterized by** transmitting public information that is stored in a memory unit specified by a user who built said device to a mobile terminal when said mobile terminal is connected.

5. A device according to claim 4, **characterized by** acquiring public information that is stored in a memory unit specified the user who built his own device, and transmitting it to said mobile terminal and displaying it before acquiring the desired information concerned and displaying it on a mobile terminal when a mobile terminal is connected and acquires desired information of a user of the mobile terminal.

6. A device according to claims 4 or 5 **characterized by** collecting tendency information on a mobile terminal subscriber.

7. An advertisement insertion method **characterized by** transmitting public information that is stored in a memory unit specified by a user who built the base station to said mobile terminal when a mobile terminal is connected to a femtocell type narrow area small-scale mobile communication base station.

8. An advertisement insertion method according to claim 7 **characterized by** acquiring public information that is stored in a memory unit specified by a user who built said base station, transmitting it to said mobile terminal and displaying it before acquiring the desired information concerned and displaying it on a mobile terminal, when a mobile terminal is connected to a femtocell type narrow area small-scale mobile communication base station and desired information of a user of a mobile terminal is acquired.

9. An advertisement insertion method according to claims 7 or 8 **characterized by** collecting the tendency information on a mobile terminal subscriber using said base station.
